# EUROPEAN PATENT SPECIFICATION

(11) **EP 3 184 233 B1**
(45) Date of publication and mention of the grant of the patent: **23.06.2021**
(21) Application number: 15833742.8
(22) Date of filing: 17.08.2015
(51) Int. Cl.: B23K 26/386, B29C 45/14, B29C 65/56

(54) **PRODUCTION METHOD FOR A BONDED STRUCTURE**
HERSTELLUNGSVERFAHREN FÜR EINE VERBUNDENE STRUKTUR
PROCÉDÉ DE FABRICATION DE STRUCTURES DE LIAISON

(30) Priority: 22.08.2014 JP 2014169280
(43) Date of publication of application: 28.06.2017
(73) Proprietor: Omron Corporation, Kyoto-shi, Kyoto 600-8530 (JP)
(72) Inventor: NISHIKAWA, Kazuyoshi, Kyoto-shi Kyoto 600-8530 (JP); SUMIYA, Akio, Kyoto-shi Kyoto 600-8530 (JP); HIRONO, Satoshi, Kyoto-shi Kyoto 600-8530 (JP); HAKATA, Tomoyuki, Kyoto-shi Kyoto 600-8530 (JP)
(74) Representative: Becker & Kurig Partnerschaft Patentanwälte PartmbB
(86) International application number: PCT/JP2015/073042
(87) International publication number: WO 2016/027777

(56) References cited:
- EP-A1- 0 454 223
- WO-A1-2010/113545
- WO-A1-2011/140229
- JP-A- S60 248 337
- JP-A- S60 248 337
- JP-A- 2013 107 273
- JP-A- 2013 107 273
- JP-A- 2013 529 137
- JP-A- 2014 166 693
- JP-A- 2015 100 959
- US-A1- 2005 212 906
- US-A1- 2009 017 242
- US-A1- 2009 017 242
- US-A1- 2009 039 000
- US-A1- 2011 126 410
- None

## Description

### BACKGROUND OF THE INVENTION

### Field of the Invention

The present invention relates to a production method of a bonded structure and a bonded structure.

### Description of Related Art

In the past, there is a known bonded structure bonded with a first member and a second member which contain different materials (for example referring to Japanese Patent No. 4020957 gazette).

The Japanese Patent No. 4020957 gazette discloses a bonding method bonding a dissimilar material such as resin with a metal material. Specifically speaking, laser scanning processing is carried out on the surface of the metal material in a cross shape, such that a plurality of bulges (concave convex parts) are formed on the surface. Besides, when the dissimilar material is bonded with the meal material with the bulges, the dissimilar material enters into a concave part, and plays an anchor effect, and therefore, a bonding strength between the metal material and the dissimilar material is improved.

WO 2011/140229 A1 discloses drilling a hole in a material using a series of laser pulses, each pulse characterized by one or more predetermined pulse characteristics including wavelength, pulse energy, inter-pulse time interval, pulse width or pulse shape. Drilling a hole in the material is achieved by placing the series of laser pulse spots at the location wherein the hole is to be drilled.

WO 2010/113545 A1 relates to a method for manufacturing a master mold for injection molding, a master mold for injection molding, and a mold for injection molding.

### SUMMARY OF THE INVENTION

### [Problem to be solved by the invention]

However, in a conventional bonding method, when a perforation (concave part) is formed on the metal surface through laser, there is a following problem: the perforation is hard to deepen relative to an opening diameter of the surface, and the bonding strength is hard to improve.

The present invention aims to solve the problem, and the present invention aims to provide a production method of a bonded structure, which is capable of improving the bonding strength and the bonded structure.

### [Technical means solving the problem]

The production method of a bonded structure of the present invention is a production method of a bonded structure as defined in claim 1. Dependent claims are directed to some beneficial embodiments. The rest of the disclosure serves a better understanding of the invention. In the production method of the bonded structure a first member and a second member are bonded, and the method comprises: a step for forming a perforation with an opening in the surface of the first member by irradiating the surface of the first member with a laser in which one pulse is configured from a plurality of sub-pulses; and a step for filling and curing the second member in the perforation of the first member.

In the production method of a bonded structure, the number of the sub-pulses of one pulse is 2 or more and 50 or less.

In the production method of a bonded structure, one period of the sub-pulses is 15 ns or less.

By the constitution in this way, the laser in which one pulse is configured from a plurality of sub-pulses is used to form the perforation, therefore, the perforation can be deepened relative to an opening diameter of the surface, and thus the bonding strength is improved.

In the production method of a bonded structure, a protrusion part facing to the inside can be formed on an inner peripheral surface of the perforation.

In the production method of a bonded structure, the first member can be metal, thermoplastic resin or thermosetting resin.

In the production method of a bonded structure, the second member can be the thermoplastic resin or thermosetting resin.

.Through the constitution in this way, the perforation is formed by using the laser in which one pulse is configured from a plurality of sub-pulses, therefore, the perforation can be deepened relative to the opening diameter of the surface, and the bonding strength is improved.

### [Effects of the invention]

According to the production method of a bonded structure, the bonding strength can be improved.

### BRIEF DESCRIPTION OF THE DRAWINGS

Fig. 1 is a schematic diagram of a profile of a bonded structure manufactured with a production method according to a first embodiment of the present invention.
Fig. 2 is a diagram for explaining a production method of the bonded structure of Fig. 1 and is a schematic diagram for illustrating the status in which a perforation is formed on a first member.
Fig. 3 is a schematic diagram of a profile of a bonded structure manufactured with a production method according to a second embodiment of the present invention.
Fig. 4 is a diagram for explaining a production method of the bonded structure of Fig. 3 and is a schematic diagram for illustrating the status in which a perforation is formed on a first member.
Fig. 5 is a space diagram illustrating a status, in which a first member is processed by laser, of an embodiment.
Fig. 6 is a space diagram illustrating a bonded structure manufactured with a production method according to an embodiment.
Fig. 7 is a schematic diagram of a first member of a first variable example of the first embodiment.
Fig. 8 is a schematic diagram of a first member of a second variable example of the first embodiment.
Fig. 9 is a schematic diagram of a first member of a third variable example of the first embodiment.
Fig. 10 is a schematic diagram of a first member of a fourth variable example of the first embodiment.

### DESCRIPTION OF THE EMBODIMENTS

Hereinafter, the embodiments of the present invention are explained with reference to drawings.

### (First embodiment)

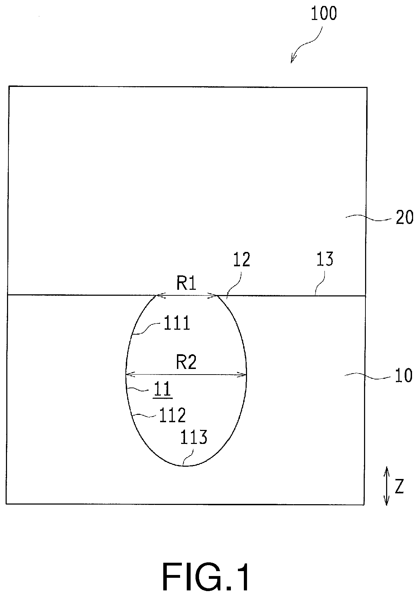

Firstly, a bonded structure 100 manufactured according to a production method of a first embodiment of the present invention is explained with reference to Fig. 1.

As shown in Fig. 1, the bonded structure is formed by bonding a first member 10 and a second member 20 which contain different materials. On a surface 13 of the first member 10, a perforation 11 with an opening is formed, and on an inner peripheral surface of the perforation 11, a protrusion part 12 protruding toward the inside is formed. The second member 20 is filled into the perforation 11 of the first member 10 and cured. In addition, Fig. 1 is a schematic diagram expressing an enlarged bonding interference between the first member 10 and the second member 20, and in fact, there are a plurality of perforations 11, but only one perforation is shown in Fig. 1.

A material of the first member 10 is metal, thermoplastic resin or thermosetting resin. A material of the second member 20 is the thermoplastic resin and thermosetting resin.

Examples of the metal are listed as follows: ferrous series metal, stainless steel series metal, copper series metal, aluminium series metal, magnesium series metal, and alloy of them. Besides, the metal can be metal forming bodies or zinc die-cast, aluminium die-cast, powder metallurgy, etc.

Examples of the thermoplastic resin are listed as follows: Polyvinyl Chloride (PVC), Polystyrene (PS), Acrylonitrile Styrene (AS), Acrylonitrile Butadiene Styrene (ABS), Polymethyl Methacrylate (PMMA), Polyethylene (PE), Polypropylene (PP), Polycarbonate (PC), m-Polyphenylene Ether (m-PPE), Polyamide 6 (PA6), Polyamide 66 (PA66), Polyacetal (POM), Polyethylene Terephthalate (PET), Polybutylene Terephthalate (PBT), Polysulfone (PSF), Polyarylate (PAR), Polyetherimide(PEI), Polyphenylene Sulfide (PPS), Polyethersulfone (PES), Polyether Ether Ketone (PEEK), Polyamideimide (PAI), Liquid Crystal Polymer (LCP), Polyvinylidene Chloride (PVDC), Polytetrafluorethylene (PTFE), Polychlorotrifluroehtylene (PCTFE) and Polyvinylidene Fluoride (PVDF). Besides, Thermoplastic Elastomer (TPE) can also be used, and examples of the TPE are listed as follows: Thermoplastic Polyolefin (TPO) (olefin series), Thermoplastic Polystyrene (TPS) (styrene series), Thermoplastic Poly Ester Elastomer (TPEE) (ester series), Thermoplastic Polyurethane (TPU) (carbamate series), Thermoplastic Polyamide (TPA) (nylon series) and Thermoplastic Polyvinyl Chloride (TPVC) (chloroethylene series).

Examples of the thermosetting resin are listed as follows: Epoxy (EP), Polyurethane (PUR), Urea Formaldehyde (UF), Melamine Formaldehyde (MF), Phenol Formaldehyde (PF), Unsaturated Polyester (UP) and Silicone (SI). Besides, Fiber Reinforced Plastics (FRP) can also be used.

In addition, in the thermoplastic resin and thermosetting resin, an additive can be added. Examples of the additive are listed as follows: inorganic series fillers (glass fiber, inorganic salts, etc.), metal series fillers, organic series fillers, carbon fiber, etc.

The perforation 11 is an approximate round non-through hole when observed from a plane, and a plurality of perforations are formed on a surface 13 of the first member 10. An opening diameter R1 of the surface 13 of the perforation 11 is preferably more than 30µm and lower than 100µm because of two reasons: 1. if the opening diameter R1 is lower than 30µm, then filling ability of the second member 20 is deteriorated sometimes, and an anchor effect is reduced; 2. if the opening diameter R1 is more than 100µm, then a quantity of the perforations 11 in per unit area is reduced sometimes and the anchor effect is reduced.

Besides, an interval of the perforation 11 (a distance between the center of a prescribed perforation 11 and the center of another perforation 11 adjacent to the prescribed perforation 11) is preferably lower than 200µm because if the interval of the perforation 11 is more than 200µm, then the quantity of the perforations 11 per unit area is reduced sometimes, and the anchor effect is reduced. In addition, an example of the lower limit of the interval of the perforation 11 is a distance that the perforations 11 are not depressed when overlapped. Besides, preferably, the intervals of the perforations 11 are the same because if the perforations 11 are equidistant, then the bonding strength in a shearing direction is in isotropy.

Herein, the perforation 11 of the first embodiment is formed by a manner of connecting an expanding part 111 and a reducing part 112, the expanding part 111 faces to a bottom 113 from the side of a surface 113 in a depth direction (Z direction) and has an increased opening diameter, and the reducing part 112 faces to the bottom 113 from the side of the surface 13 in the depth direction and has a reduced opening diameter. The expanding part 111 is formed in a manner of curve expanding, and the reducing part 112 is formed in a manner of curve reducing.

Besides, the expanding part 111 is configured on the side of the surface 13, and the reducing part 112 is configured on the side of the bottom 113. Therefore, in the perforation 11, an opening diameter (inner diameter) R2 of a boundary part between the expanding part 111 and the reducing part 112 is maximal, and the opening diameter R1 is smaller than the opening diameter R2. Therefore, the protrusion part 12 is configured on the side of the surface 13 of the first member 10. The protrusion part 12 for example is formed by a whole length part all over a peripheral direction, and is shaped into a ring.

The perforation 11 is formed by irradiating the laser for processing. As a variety of the laser, an opinion of pulse oscillation can be considered, fiber laser, Yttrium Aluminum Garnet (YAG), Yttrium orthovanadate (YVO₄) laser, semiconductor laser, carbon dioxide laser and excimer laser can be selected, and if a wavelength of the laser is considered, then the fiber laser, the YAG laser, second harmonics of the YAG laser, YVO₄ laser and the semiconductor laser can be preferably adopted. In addition, about output of the laser, an irradiating diameter of the laser, a material variety of the first member 10 and a shape (for example thickness) of the first member 10, and the like need to be considered. For example, the upper limit of the output of the laser is 40W because if the output of the laser is more than 40W, then the energy is high and the perforation 11 with the protrusion part 12 is difficultly formed.

Besides, the perforation 11 is formed by irradiating laser in which one pulse is configured from a plurality of sub-pulses. As an example of a device emitting such laser, a fiber laser marker MX-Z2000 or MX-Z2050 manufactured by Omron can be listed. Specifically speaking, when laser irradiates the first member 10, the first member 10 is locally molten, and thus formation of the perforation 11 is promoted. At this point, the laser contains a plurality of sub-pulses, therefore, the molten first member 10 is hard to scatter and can be easily accumulated nearby the perforation 11. Besides, when the formation of the perforation 11 is promoted, the molten first member 10 is accumulated in the perforation 11, and thus forms the protrusion part 12. Therefore, by the protrusion part 12, reflection waves of the laser are blocked inside the perforation 11, such that the laser processing is further promoted to a depth direction. That is, energy of the laser is easily concentrated in the depth direction. As a result, in the perforation 11, the depth is increased relative to the opening diameter R1 of the surface. In addition, an irradiating direction of the laser for example is vertical relative to the surface 13, and an axis of the perforation 11 is vertical relative to the surface 13.

In this way, by irradiating the laser in which one pulse is configured from a plurality of sub-pulses, the depth of the perforation 11 can be increased relative to the opening diameter R1 of the surface, therefore, the anchor effect is improved, and the bonding strength can be improved. Further, under a heat cycle environment, even if a peeling stress caused by a linear expansion coefficient of the first member 10 and the second member 20 is generated, the bonding strength can be maintained. That is, the durability under the heat cycle environment is improved.

In addition, a processing condition of the fiber laser marker is that one period of the sub pulse is 15ns or less because if one period of the sub pulse is more than 15ns, then the energy is easily dissipated due to heat conduction, and the perforation 11 with the protrusion part 12 is hard to form. In addition, one period of the sub pulse is the total time of the irradiating time of once sub pulse and an interval from the ending of irradiating of such sub pulse to the starting of the irradiating of the next sub pulse.

Besides, a processing condition of the fiber laser marker is that the number of the sub-pulses of one pulse is 2 or more and 50 or less because if the number of the sub-pulses is more than 50, then the unit output of the sub-pulses is reduced, and the perforation 11 with the protrusion part 12 is hard to form.

Besides, the second member 20 is bonded with the surface 13 of the first member 10 with the perforation 11. The second member 20 is bonded with the first member 10 through for example injection molding, hot plate welding, laser welding, injection molding hardening, ultrasonic welding or vibration welding. Therefore, the second member 20 is cured under a condition of being filled into the perforation 11.

Such bonded structure 100 for example is suitable for a condition that a resin cover (not shown) is bonded with a metal case of a photoelectric sensor (not shown). At this point, the metal case is equivalent to the first member 10, and the resin cover is equivalent to the second member 20.

### -the production method of the bonded structure-

Next, the production method of the bonded structure 100 of the first embodiment is explained with reference to Figs. 1-2.

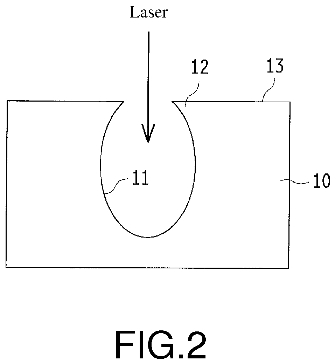

Firstly, as shown in Fig. 2, the laser in which one pulse is configured from a plurality of sub-pulses, irradiates the surface 13 of the first member 10, therefore, a perforation 11 is formed on the surface 13 of the first member 10, and a protrusion part 12 is formed on an inner peripheral surface of the perforation 11. At this point, if the protrusion part 12 is formed, then reflection waves of the laser are blocked inside the perforation 11, such that the laser processing is further promoted to the depth direction. Therefore, in the perforation 11, the depth relative to the opening diameter R1 of the surface is increased.

Afterwards, the second member 20 is filled into the perforation 11 of the first member 10, and the second member 20 is cured. Therefore, the first member 10 and the second member 20 are bonded to form the bonded structure 100 (with reference to Fig. 1). In addition, the second member 20 for example is bonded by injection molding, hot plate welding, laser welding, injection molding hardening, ultrasonic welding or vibration welding.

### (Second embodiment)

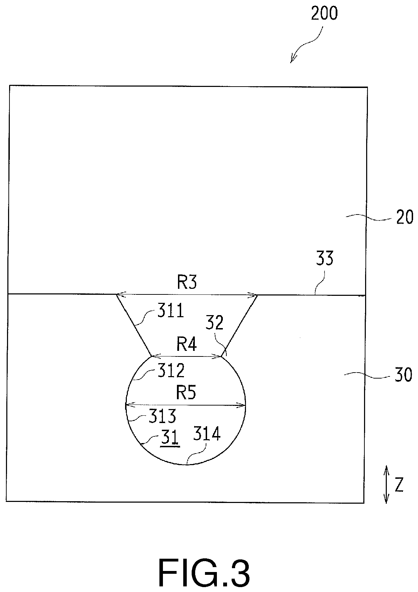

Next, a bonded structure 200 manufactured according to a production method of a second embodiment of the present invention is explained with reference to Fig. 3.

As shown in Fig. 3, the bonded structure 200 is a bonded structure of the first member 30 and the second member 20, which contain different materials. On a surface 33 of the first member 30, a perforation 31 with an opening is formed, and on an inner peripheral surface of the perforation 31, a protrusion part 32 protruding toward the inside is formed. The second member 20 is filled into the perforation 31 of the first member 30 and cured.

The perforation 31 of the second embodiment is formed by a manner of connecting a reducing part 311, an expanding part 312 and a reducing part 313, the reducing part 311 faces to a bottom 314 from the side of a surface 33 in a depth direction (Z direction) and has a reduced opening diameter, the expanding part 312 faces to a bottom 314 from the side of the surface 33 in the depth direction and has an increased opening diameter, and the reducing part 313 faces to the bottom 314 from the side of the surface 33 in the depth direction and has a reduced opening diameter. The reducing part 311 is formed in a manner of linear reducing, the expanding part 312 is formed in a manner of curve expanding, and the reducing part 313 is formed in a manner of curve reducing.

Besides, the reducing part 311, the expanding part 312 and the reducing part 313 are configured from the side of the surface 33 to the bottom 314 in sequence. Therefore, in the perforation 31, an opening diameter (inner diameter) R4 of a boundary part between the reducing part 311 and the expanding part 312 is smaller than an opening diameter R3 of the surface 33 and an opening diameter R5 of a boundary part between the expanding part 312 and the reducing part 313. Therefore, the protrusion part 32 is configured in a position entering the side of the bottom 314. The protrusion part 32 for example is formed by a whole length part all over a peripheral direction, and is shaped into a ring.

In addition, other constitutions of the first member 30 are same as the first member 10.

### -the production method of the bonded structure-

Next, the production method of the bonded structure 200 of the second embodiment is explained with reference to Figs. 3-4.

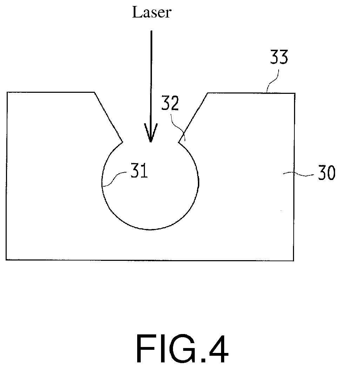

At first, as shown in Fig. 4, the laser in which one pulse is configured from a plurality of sub-pulses, irradiates the surface 33 of the first member 30, therefore, a perforation 31 is formed on the surface 33 of the first member 30, and a protrusion part 32 is formed on an inner peripheral surface of the perforation 31. At this point, if the protrusion part 32 is formed, then reflection waves of the laser are blocked inside the perforation 31, such that the laser processing is further promoted to the depth direction. Therefore, in the perforation 31, the depth relative to the opening diameter R3 of the surface is increased.

In addition, in the second embodiment, the difference from the first embodiment is that the protrusion part 32 is configured in a position entering the side of the bottom 314, but such difference for example is caused by the difference of the material of the first member 30 or an irradiation condition of the laser.

Afterwards, the second member 30 is filled into the perforation 31 of the first member 30, and the second member 20 is cured. Therefore, the first member 30 and the second member 20 are bonded to form the bonded structure 200 (with reference to Fig. 3). In addition, the second member 20 for example is bonded by injection molding, hot plate welding, laser welding, injection molding hardening, ultrasonic welding or vibration welding.

### -Experiment examples-

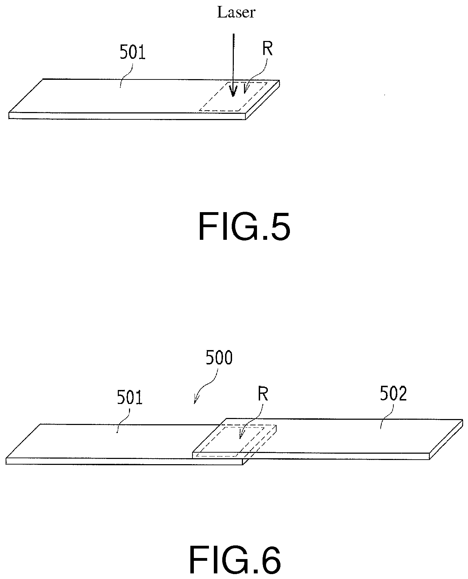

Next, Figs. 5-6 are used for explaining an experiment example 1 and an experiment example 2 performed to confirm effects of the second embodiment.

### [Experiment example 1]

In the experiment example 1, a bonded structure 500 (referring to Fig. 6) of the first embodiment to the fourth embodiment corresponding to the second embodiment and a bonded structure of a comparison example 1 are manufactured and respective bonding evaluation is carried out. In addition, as a bonding evaluation, the bonding strength of the structure body not subjected to a thermal impact test is determined, the bonding strength of the structure body after the thermal impact test is determined, and the qualification and unqualification are judged based on such determining result. The result is as shown in Table 1.

**[Table 1]**

| | | Embodiment 1 | Embodiment 2 | Embodiment 3 | Embodiment 4 | Comparison example 1 |
|---|---|---|---|---|---|---|
| First member | | SUS | | | | |
| Second member | | PBT | | | | |
| Pulse | Number of sub-pulses | 20 | 2 | 20 | 50 | Single pulse |
| | One period of sub-pulses | 15.0 ns | 15.0 ns | 10.5 ns | 15.0 ns | |
| Perforatio n | Opening diameter of the surface | 58 µm | 55 µm | 54 µm | 56 µm | 65 µm |
| | Depth | 74 µm | 42 µm | 65 µm | 86 µm | 34 µm |
| Bonding property | Bonding strength (before the thermal impact test) | 16.7 MPa | 12.3 MPa | 15.3 MPa | 18.5 MPa | 12.2 MPa |
| | Bonding strength (after the thermal impact test) | 16.0 MPa | 11.1 MPa | 14.8 MPa | 18.1 MPa | 8.9 MPa |
| | Bonding strength Retention rate | 96% | 90% | 97% | 98% | 73% |
| Judgment on qualification and unqualification | | ○ | ○ | ○ | ○ | × |

At first, the production method of the bonded structure 500 of the embodiments 1-4 is explained.

In the bonded structure 500 of the embodiments 1-4, SUS304 is used as the material of a first member 501. The first member 501 is formed into a plate shape as shown in Fig. 5, and has a length of 100mm, a width of 29mm and a thickness of 3mm.

Besides, laser irradiates a prescribed region R on the surface of the first member 501. The prescribed region R is an area bonded by the bonded structure 500, and is set into 12.5x20mm. The shared laser irradiating conditions in the embodiments 1-4 are as follows.

### <Laser irradiating conditions>

Laser: fiber laser (wavelength 1062nm)
Frequency: 10kHz
Output: 3.8W
Scanning speed: 650mm/sec
Scanning times: 20 times
Irradiating interval: 65µm

Besides, as shown in Table 1, in the first embodiment, the number of the sub-pulses is set to be 20, and one period of the sub-pulses is set into 15.0ns. In the second embodiment, the number of the sub-pulses is set to be 2, and one period of the sub-pulses is set into 15.0ns. In the third embodiment, the number of the sub-pulses is set to be 20, and one period of the sub-pulses is set into 10.5ns. In the fourth embodiment, the number of the sub-pulses is set to be 50, and one period of the sub-pulses is set into 15.0ns.

In addition, the frequency is a frequency of a pulse containing a plurality of sub-pulses. That is, in the irradiating condition, the laser (pulse), containing a plurality of sub-pulses, irradiates at an interval of 65µm for ten thousands times while moving for 650mm in one second. In addition, the scanning times are times that the laser irradiates a same part repeatedly. Besides, in the embodiments 1, 2 and 4, the irradiating time of the sub-pulses for one time is 7.5ns, and an irradiating interval of the sub-pulses is 7.5ns. And in embodiment 3, the irradiating time of the sub-pulses for one time is 3ns, and an irradiating interval of the sub-pulses is 7.5ns.

In this way, by irradiating the laser in which one pulse is configured from a plurality of sub-pulses, a perforation is formed in a prescribed region R of the first member 501, and in the perforation, the protrusion part is formed.

Besides, insert molding, the second member 502 is bonded with the surface of the first member 501. In the bonded structure 500 of the embodiments 1-4, DURANEX (registered trademark) 3316 manufactured by PBT (WinTech Polymer) is taken as a material of the second member 502. Besides, J35EL3 manufactured by Japan Steel Works is taken as a molding machine. The molding conditions are as follows.

### <Molding conditions>

Pre-drying: 120°Cx5h
Die temperature: 120°C
Cylinder temperature: 270°C
Maintained pressure: 100MPa

The bonded structure 500 of the embodiments 1-4 is manufactured in this way. In addition, the second member 502 is formed into a plate shape, and has a length of 100mm, a width of 25mm and a thickness of 3mm.

Next, the production method of the comparison example 1 is explained.

In the bonded structure of the comparison example 1, the materials of the first member and the second member use the same materials as the first to fourth embodiments, and the molding conditions are set to be same. Besides, in the bonded structure of the comparison example 1, fiber laser without a pulse control function is used to form the perforation. That is, the perforation is formed by irradiating the laser (single pulse), not containing a plurality of sub-pulses, of one pulse. Therefore, on the first member of the comparison example 1, the perforation with a mortar shape (conical) is formed.

Besides, the bonded structure 500 of the embodiments 1-4 and the bonded structure of the comparison structure are subjected to bonding evaluation.

In addition, the bonding strength is determined by an electromechanical universal tester 5900 manufactured by Instron. Specifically speaking, the experiment is carried out at a tension speed of 5mm/min in a shearing direction, and the experiment is ended when the second member is broken or a boundary interface is broken. Besides, the maximal strength in the test is adopted as the bonding strength.

Besides, a thermal impact test is carried out by using a thermal impact device TSD-100 manufactured by Espec. Specifically speaking, low temperature exposure below -40°C for 30 minutes and high temperature exposure below 85°C for 30 minutes are carried out for 100 times repeatedly.

Besides, in order to judge reliability under a thermal circulation environment, qualification and unqualification are carried out according to the following criterion.
Qualified (o): "the bonding strength after the thermal impact test"/"the bonding strength before the thermal impact test" is larger than or equal to 90%
Unqualified (x): "the bonding strength after the thermal impact test"/"the bonding strength before the thermal impact test" is smaller than 90%

As shown in Table 1, the bonded structure 500 of the embodiments 1-4 is compared with that of the comparison example 1, and the depth of the perforation relative to the opening diameter of the surface is increased because in the bonded structure 500 of the embodiments 1-4, by irradiating the laser in which one pulse is configured from a plurality of sub-pulses, the protrusion part is formed in the perforation, reflection waves of the laser are blocked inside the perforation, and the laser processing is further promoted to the depth direction.

Besides, the bonded structure 500 of the embodiments 1-4 is compared with that of the comparison example 1, and the bonding strength before the thermal impact test is improved than that after the thermal impact test because in the bonded structure 500 of the embodiments 1-4, the depth of the perforation is increased relative to the opening diameter of the surface, therefore, the anchor effect is increased and the bonding strength is improved.

Further it is judged that in the bonded structure 500 of the embodiments 1-4, even after the thermal impact test, the bonding strength before the thermal impact test is kept more than 90%. Relatively, compared with the bonded structure of the comparison example 1, after the thermal impact test, the bonding strength is greatly reduced. Therefore, like the bonded structure 500 of the embodiments 1-4, the laser in which one pulse is configured from a plurality of sub-pulses is used to form a deep perforation, and therefore, the durability under the thermal circulation environment is improved.

### [Experiment example 2]

In the experiment example 2, a bonded structure of the embodiments 5-8 corresponding to the second embodiment and a bonded structure of a comparison example 2 are manufactured and respective bonding evaluation is carried out. In addition, the bonding evaluation is performed like experiment example 1 and the result is as shown in Table 2.

**[Table 2]**

| | | Embodiment 5 | Embodiment 6 | Embodiment 7 | Embodiment 8 | Comparison example 2 |
|---|---|---|---|---|---|---|
| First member | | PPS | | | | |
| Second member | | PBT | | | | |
| Pulse | Number of sub-pulses | 20 | 2 | 20 | 50 | Single pulse |
| | One period of sub-pulses | 15.0 ns | 15.0 ns | 10.5 ns | 15.0 ns | |
| Perforation | Opening diameter of the surface | 54 µm | 49 µm | 53 µm | 58 µm | 72 µm |
| | Depth | 65 µm | 40 µm | 59 µm | 76 µm | 35 µm |
| Bonding property | Bonding strength (before the thermal impact test) | 15.4 MPa | 14.3 MPa | 15.2 MPa | 16.3 MPa | 10.2 MPa |
| | Bonding strength (after the thermal impact strength) | 14.7 MPa | 13.5 MPa | 14.1 MPa | 15.5 MPa | 4.1 MPa |
| | Bonding strength retention rate | 95% | 94% | 93% | 95% | 40% |
| Judgment on qualification and unqualification | | ○ | ○ | ○ | ○ | × |

In the experiment example 2, the material of the first member is changed to be different from the experiment example 1. Specifically speaking, in the bonded structure of the experiment example 2, FORTRON (registered trademark) 1140 manufactured by PPS (Polyplastics) is taken as the material of the first member. Besides, along with the change of the first member, the shared laser irradiating conditions in embodiments 5-8 are set as follows.

### <Laser irradiating conditions>

Laser: fiber laser (wavelength 1062nm)
Frequency: 10kHz
Output: 1.1W
Scanning speed: 650mm/sec
Scanning times: 3 times
Irradiating interval: 65 µm

Besides, as shown in Table 2, in the fifth embodiment, the number of the sub-pulses is set to be 20, and one period of the sub-pulses is set into 15.0ns. In the sixth embodiment, the number of the sub-pulses is set to be 2, and one period of the sub-pulses is set into 15.0ns. In the seventh embodiment, the number of the sub-pulses is set to be 20, and one period of the sub-pulses is set into 10.5ns. In the eighth embodiment, the number of the sub-pulses is set to be 50, and one period of the sub-pulses is set into 15.0ns.

As shown in Table 2, the bonded structure of the embodiments 5-8 is compared with that of the comparison example 2, and the depth of the perforation relative to the opening diameter of the surface is increased because in the bonded structure 500 of the embodiments 5-8, by irradiating the laser in which one pulse is configured from a plurality of sub-pulses, the protrusion part is formed in the perforation, reflection waves of the laser are blocked inside the perforation, and the laser processing is further promoted to the depth direction.

Besides, the bonded structure of the embodiments 5-8 is compared with that of the comparison example 2, and the bonding strength before the thermal impact test is increased than that after the thermal impact test because in the bonded structure of the embodiments 5-8, the depth of the perforation is increased relative to the opening diameter of the surface, therefore, the anchor effect is increased and the bonding strength is improved.

.Further it is judged that in the bonded structure of the embodiments 5-8, even after the thermal impact test, the bonding strength before the thermal impact test is kept more than 90%. Relatively, in the bonded structure of the comparison example 2, after the thermal impact test, the bonding strength is greatly reduced. That is, even under the condition that the resin PPS is used as the material of the first member, the laser in which one pulse is configured from a plurality of sub-pulses is used to form a deep perforation, and therefore, the bonding strength is improved, and the durability under the thermal circulation environment is improved.

### (Other embodiments)

In addition, the embodiments disclosed herein are exampled in all aspects and are not a basis of a defining explanation. Therefore, a technical scope of the present invention is not explained through the embodiments merely but is defined based on a recording of a scope of claims. Besides, the technical scope of the present invention contains all changes in the meaning and scope equivalent to the scope of the claims.

For example, in the first embodiment, the surface 13 can be both flat and bent. In addition, the second embodiment 2 is also the same.

Besides, the first embodiment shows an example formed by a manner of connecting the expanding part 111 and the reducing part 112 but is not limited thereto, and a part extending straightforward along the depth direction can be formed between the expanding part and the reducing part. In addition, the second embodiment is the same.

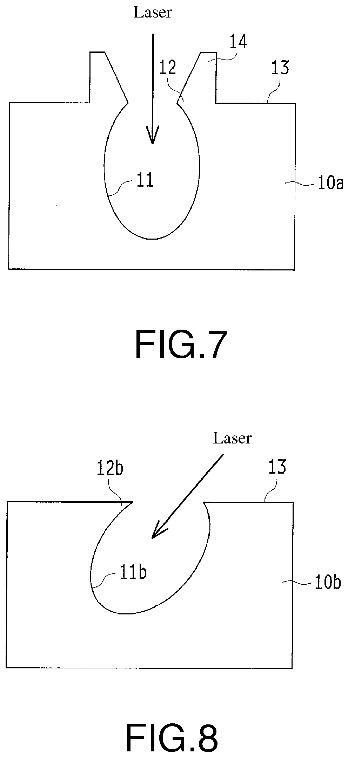

Besides, the first embodiment shows an example that the periphery of the perforation 11 is flat, but is not limited thereto, and can be like the first member 10a of the first variable example as shown in Fig. 7 that a bulging part 14 bulging toward the upper side from the surface 13 can be formed around the opening of the perforation 11. The bulging part 14 is formed in a manner of surrounding the perforation 11, and is approximately round when observed from a plane. The bulging part 14 for example is formed by accumulating the molten first member 10a when the laser in which one pulse is configured from a plurality of sub-pulses irradiates. Through the constitution in this way, the anchor effect is generated by the bulging part 14, therefore, the bonding strength is further improved. In addition, the second embodiment is the same.

Besides, the first embodiment shows an example that the axis of the perforation 11 is vertical relative to the surface 13, but it not limited thereto, and can be like the first member 10b of a second variable example as shown in Fig. 8 that the axis of the perforation 11b is inclined relative to the surface 13. On the inner peripheral surface of the perforation 11b, a protrusion part 12b protruding to the inside is formed. The perforation 11b for example is formed by inclining an irradiation direction of the laser relative to the surface 13 (more than 45° and smaller than 90°). Therefore, even under the condition that there is an obstacle during laser irradiating above the region where the perforation 11b is formed, the perforation 11b can be formed. In addition, the second embodiment is the same.

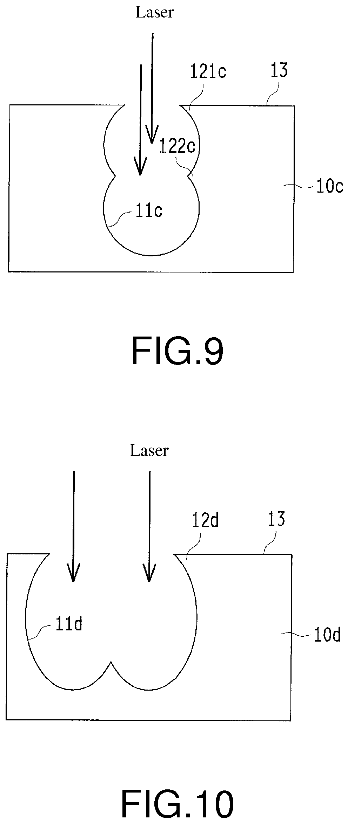

Besides, the first embodiment shows an example that the protrusion part 12 is formed in the perforation 11, but is not limited thereto, and can be like a first member 10c of a third variable as shown in Fig. 9 that a plurality of protrusion parts 121c and protrusion parts 122c can be formed in the perforation 11c. The perforation 11c for example can be formed by changing an output condition of the laser and irradiating the laser to the same part. If constituted in this way, then a surface area of the perforation 11c is increased, and by forming the plurality of protrusion parts 121c and the protrusion parts 122c, the bonding strength is further improved. In addition, in Fig. 9, more than three protrusions 121c and 122c can be formed. In addition, the second embodiment is the same.

Besides, like a first member 10d of a fourth variable example of the first embodiment as shown in Fig. 10, one perforation 11d can be formed by irradiating the laser in staggered positions. That is, one perforation 11d can be formed by overlapping a part of the perforation formed by laser irradiating. On the inner peripheral surface of the perforation 11d, a protrusion part 12d protruding to the inside is formed. Besides, the second embodiment is the same. Besides, the first to fourth variable examples can be properly combined.

### [Industrial applicability]

The present invention can be used as a production method of a bonded structure in which a first member and a second member made of different materials are bonded.

### [Reference signs]

10, 10a, 10b, 10c, 10d: first member
11, 11b, 11c, 11d: perforation
12, 12b, 121c, 122c, 12d: protrusion part
13: surface
20: second member
30: first member
31: perforation
32 protrusion part
33: surface
100: bonded structure
200: bonded structure

## Claims

1. A production method of a bonded structure (100, 200) in which a first member (10, 10a, 10b, 10c, 10d, 30) and a second member (20) are bonded, comprising:
a step for forming a perforation (11, 11b, 11c, 11d, 31) with an opening in the surface (13) of the first member (10, 10a, 10b, 10c, 10d, 30) by irradiating the surface of the first member (10, 10a, 10b, 10c, 10d, 30) with a laser in which one pulse is configured from a plurality of sub-pulses, the production method of a bonded structure (100,200) being **characterized in that** one period of the sub-pulses is 15 ns or less and the number of the sub-pulses of one pulse is 2 or more and 50 or less; and
a step for filling and curing the second member (20) in the perforation (11, 11b, 11c, 11d, 31) of the first member (10, 10a, 10b, 10c, 10d, 30).

2. The production method of a bonded structure according to claim 1, wherein a protrusion part facing to the inside is formed on an inner peripheral surface of the perforation.

3. The production method of a bonded structure according to claim 1 or 2, **characterized in that**
the first member (10, 10a, 10b, 10c, 10d, 30) is metal, thermoplastic resin or thermosetting resin.

4. The production method of a bonded structure according to any one of claims 1-3, **characterized in that**
the second member (20) is the thermoplastic resin or thermosetting resin.

## Patentansprüche

1. Verfahren zur Herstellung einer Verbundstruktur (100, 200), bei der ein erstes Element (10, 10a, 10b, 10c, 10d, 30) und ein zweites Element (20) miteinander verbunden werden, umfassend:
einen Schritt zum Bilden einer Perforation (11, 11b, 11c, 11d, 31) mit einer Öffnung in der Oberfläche (13) des ersten Elements (10, 10a, 10b, 10c, 10d, 30) durch Bestrahlen der Oberfläche des ersten Elements (10, 10a, 10b, 10c, 10d, 30) mit einem Laser, bei dem ein Puls aus einer Vielzahl von Teilpulsen konfiguriert ist, wobei das Herstellungsverfahren einer Verbundstruktur (100, 200) **dadurch gekennzeichnet ist, dass** eine Periode der Teilpulse 15 ns oder weniger beträgt und die Anzahl der Teilpulse eines Pulses 2 oder mehr und 50 oder weniger beträgt; und
einen Schritt zum Füllen und Aushärten des zweiten Elements (20) in der Perforation (11, 11b, 11c, 11d, 31) des ersten Elements (10, 10a, 10b, 10c, 10d, 30).

2. Verfahren zur Herstellung einer Verbundstruktur gemäß Anspruch 1, wobei an einer inneren Randfläche der Perforation ein nach innen gerichteter Vorsprungsteil gebildet wird.

3. Verfahren zur Herstellung einer Verbundstruktur gemäß Anspruch 1 oder 2, **dadurch gekennzeichnet, dass**
das erste Element (10, 10a, 10b, 10c, 10d, 30) ein Metall, thermoplastisches Harz oder Wärme-härtbares Harz ist.

4. Verfahren zur Herstellung einer Verbundstruktur gemäß irgendeinem der Ansprüche 1 bis 3, **dadurch gekennzeichnet, dass**
das zweite Element (20) das thermoplastische Harz oder Wärme-härtbares Harz ist.

## Revendications

1. Procédé de production d'une structure liée (100, 200) dans laquelle un premier organe (10, 10a, 10b, 10c, 10d, 30) et un deuxième organe (20) sont liés, comprenant :
une étape de formation d'une perforation (11, 11b, 11c, 11d, 31) avec une ouverture dans la surface (13) du premier organe (10, 10a, 10b, 10c, 10d, 30) par l'irradiation de la surface du premier organe (10, 10a, 10b, 10c, 10d, 30) avec un laser dans lequel une impulsion est configurée à partir d'une pluralité de sous-impulsions, le procédé de production d'une structure liée (100, 200) étant **caractérisé en ce qu'**une période des sous-impulsions est 15 ns ou moins et le nombre des sous-impulsions d'une impulsion est 2 ou plus et 50 ou moins ; et
une étape de remplissage et de durcissement du deuxième organe (20) dans la perforation (11, 11b, 11c, 11d, 31) du premier organe (10, 10a, 10b, 10c, 10d, 30).

2. Procédé de production d'une structure liée selon la revendication 1, dans lequel une partie saillante faisant face à l'intérieur est formée sur une surface périphérique intérieure de la perforation.

3. Procédé de production d'une structure liée selon la revendication 1 ou 2, **caractérisé en ce que**
le premier organe (10, 10a, 10b, 10c, 10d, 30) est un métal, une résine thermoplastique ou une résine thermodurcissable.

4. Procédé de production d'une structure liée selon l'une quelconque des revendications 1 à 3, **caractérisé en ce que**
le deuxième organe (20) est la résine thermoplastique ou la résine thermodurcissable.
